# EUROPÄISCHE PATENTSCHRIFT

(11) **EP 0 675 080 B1**
(45) Veröffentlichungstag und Bekanntmachung des Hinweises auf die Patenterteilung: **11.06.1997**
(21) Anmeldenummer: 95102331.6
(22) Anmeldetag: 20.02.1995
(51) Int. Cl.: C02F 1/44, B01D 61/58, B05B 15/12

(54) **Verfahren zur Aufkonzentration von Lackoverspray**
Process for concentrating lacquer overspray
Procédé de concentration de l'excédent de laque pulvérisée

(30) Priorität: 03.03.1994 DE 4406952
(43) Veröffentlichungstag der Anmeldung: 04.10.1995
(73) Patentinhaber: BAYER AG, 51368 Leverkusen (DE)
(72) Erfinder: Gerigk, Markus, Dr., D-50767 Köln (DE); Brück, Jochen, Dr., D-51061 Köln (DE); Hovestadt, Wieland, Dr., D-47802 Krefeld (DE)

(56) Entgegenhaltungen:
- EP-A- 0 536 648
- EP-A- 0 553 684
- EP-A- 0 567 915
- EP-A- 0 629 433
- WO-A-91/09666

## Beschreibung

Die Erfindung betrifft ein Verfahren zur Aufkonzentration des in Spritzkabinen mit Naßabscheidung anfallenden Oversprays von einkomponentigen Wasserlacken durch ein mehrstufiges Membranverfahren unter Verwendung des hierbei anfallenden Permeats als Kabinenwasser und die Verwendung des letztendlich anfallenden Retentats als wäßrigen Wasserlack oder als Bestandteil eines wäßrigen Wasserlacks.

Der Begriff "Overspray" soll hierbei diejenigen Lackbestandteile umfassen, die beim Verspritzen des Lacks nicht das zu beschichtende Substrat treffen und damit ohne besondere Vorkehrungen verloren sind.

Aufgrund der immer größer werdenden Umweltproblematik sind in jüngerer Zeit verschiedenste Verfahren entwickelt worden, um die Sondermüllmenge, die durch Lackoverspray entsteht, zu reduzieren. Üblicherweise wird der durch das Wasser der Spritzkabine verdünnte Overspray in Sammelbecken koaguliert und entsorgt. Das Konzept einiger neuer Verfahren für wasserverdünnbare Lacke beruht darauf, auf eine Koagulation zu verzichten und den Overspray stattdessen schonend aufzukonzentrieren und als Lack wiederzuverwerten.

Die DE-A- 23 53 469 beschreibt die Aufkonzentration des Oversprays durch eine Ultrafiltration. Der verdünnte Overspray strömt an einer semipermeablen Membran vorbei, wobei die niedermolekularen Stoffe, insbesondere Wasser aber auch niedermolekulare gelöste Bindemittelbestandteile und Hilfsmittel, die Membran als sogenanntes Permeat durchdringen, während die Hauptbestandteile des Lackes von der Membran zurückgehalten und als sogenanntes Retentat weitergeleitet werden.

In der DE-A- 3428300 wird dargestellt, daß als Wasser der Spritzkabine ausschließlich entsalztes Wasser verwendet werden sollte, um ein Koagulieren des Oversprays zu vermeiden. In dem durch die DE-A- 29 45 523 beschriebenen Verfahren wird das gleiche Ziel durch Zusatz von Emulgatoren erreicht.

Aus der EP-A-0 141 171 ist bekannt, daß es möglich ist, die Ultrafiltration kontinuierlich zu betreiben. Von dem in der Spritzkabine im Kreislauf geführten Gemisch aus Kabinenwasser und Overspray wird kontinuierlich eine Teilmenge abgetrennt und ultrafiltriert. Das Permeat wird dem Kabinenwasser wieder zugeführt. Die physikalischen und chemischen Eigenschaften des als Rohlack bezeichneten Retentats werden überprüft. Nach z.B. Verdünnen bzw. Konzentrieren kann der aufkonzentrierte Overspray wiederverwertet werden.

Die WO 91/09666 beschreibt die Wiederaufarbeitung von hitzehärtbaren, wäßrigen Alkyd- oder Acrylharzen durch Ultrafiltration, wobei ein aliphatisches Amin zur Verhinderung der Koaleszenz der Lacke und ein Glykolderivat zur Einstellung des Durchsatzes bei der Ultrafiltration zugesetzt wird. Diese Zusätze haben jedoch den Nachteil, daß sie die Qualität des aufgearbeiteten Lackes beeinflussen und außerdem die Abluft der Kabine belasten.

Aus der neuen Literatur (z.B. JOT 10 (1992) 32 bis 38, JOT 3 (1992) 28 bis 33) ist bekannt, daß die Ultrafiltration des Standes der Technik bei vielen Lacksystemen zu gravierenden Problemen führt und deswegen nicht angewandt werden kann. Gründe hierfür können z.B. eine hohe Neigung zur Schaumbildung durch niedermolekulare Emulgatoren oder auch niedermolekulare Bindemittelbestandteile sein, die in das Permeat gelangen und sich dort anreichern. Diese verlorengegangenen Bestandteile können für die Lackqualität des Recyclats von entscheidender Bedeutung sein, so daß eine direkte Wiederverwertung als Originallack nicht möglich ist.

Aufgabe der Erfindung war es daher, ein Verfahren zu entwickeln, welches die Wiederaufarbeitung von Overspray aus wasserverdünnbaren Lacken zu neuen Lacken mit nahezu Originalzusammensetzung und damit Originalqualität ermöglicht.

Überraschenderweise wurde nun gefunden, daß diese Aufgabe durch das nachstehend näher beschriebene spezielle, mehrstufige Membranverfahren gelöst werden kann.

Mehrstufige Membranverfahren sind bekannt und werden u.a. im Bereich der Aufarbeitung von Molke, Meerwasser, Ölemulsionen oder Latexabwässern angewandt (siehe z.B. M. Mulder "Basic principles of membrane technology" Kluwer Academic Publishers (1991), R. Rautenbach, R. Albrecht "Membrantrennverfahren: Ultrafiltration und Umkehrosmose", Otto Salle Verlag, Frankfurt am Main (1981), DE-A- 41 26 483). Hierbei wird u.a. auch die Möglichkeit beschrieben, eine Ultrafiltration mit einer Umkehrosmose zu kombinieren. Das Permeat der Ultrafiltration, welches niedermolekulare Bestandteile enthält, wird hierbei über eine Umkehrosmose aufkonzentriert. Das Retentat der Umkehrosmose wird wieder in den Feedstrom der Ultrafiltration eingespeist.

Die EP-A-0 553 684 beschreibt ein mehrstufiges Membranverfahren zur Aufkonzentration des Oversprays von wasserverdünnbaren Lacken in Spritzkabinen mit Naßauswaschung, wobei das Kabinenumwälzwasser kontinuierlich in einer Ultrafiltrationseinheit vorkonzentriert und das Permeat als Umwälzwasser zurückgeführt wird. Die Endkonzentrierung erfolgt chargenweise in einer weiteren Ultrafiltrationseinheit. Das Permeat der Endkonzentrierungsstufe kann durch eine nachgeschaltete Umkehrosmosestufe aufkonzentriert werden. Eine Rückführung des Retentats der Umkehrosmose in den Ultrafiltrationsfeed ist nicht vorgesehen. Mit dieser Anordnung ist es daher nicht möglich, den Overspray als Lack mit nahezu Originalzusammensetzung zurückzugewinnen.

In der EP-A-0 567 915 wird die Möglichkeit beschrieben, das Retentat der Umkehrosmosestufe entweder in die Vorkonzentrierungs- oder in die Endkonzentrierungsstufe zurückzuführen. Die Aufkonzentrierung von niedermolekularen Bestandteilen durch Umkehrosmose kann wegen des sich aufbauenden osmotischen Druckes sinnvoll nur bis zu relativ niedrigen Konzentrationen von maximal 5 % erfolgen, so daß durch die Rückführung des Retentats der Umkehrosmose in die Ultrafiltrationsstufen, eine Rückverdünnung eintritt. Da der Rückhalt einer Ultrafiltration für lösliche niedermolekulare Lackbestandteile schlecht ist, kann der Lack auch durch dieses Verfahren nicht in nahezu Originalzusammensetzung zurückgewonnen werden.

Gegenstand der Erfindung ist ein Verfahren zur Aufkonzentration des in Spritzkabinen mit Naßauswaschung anfallenden, mit Wasser der Spritzkabine verdünnten Oversprays durch eine mehrstufige Membranfiltration, dadurch gekennzeichnet, daß man das aufzukonzentrierende Kabinenwasser/Overspray-Gemisch (2) in einer Ultrafiltrationsstufe (3) vorkonzentriert, indem man es in ein Retentat (4) und ein niedermolekulare Bestandteile enthaltendes Permeat (5) auftrennt,
das Ultrafiltrationspermeat (5) zusammen mit dem Nanofiltrationspermeat (11) in einer Umkehrosmosestufe (6) in ein Retentat (7) und ein aus in den Kabinenwasserkreislauf zurückzuführendes Permeat (8) auftrennt und
die vereinigten Retentate (4) und (7) in einer Nanofiltrationsstufe (9) in das Permeat (11) und ein Retentat (10) auftrennt, welches bezüglich seiner Zusammensetzung und Konzentration dem eingesetzten Wasserlack weitgehend entspricht
.

Im Rahmen der Erfindung soll unter Ultrafiltration ein unter dieser Bezeichnung an sich bekanntes Membrantrennverfahren verstanden werden, welches mit Membranen einer Ausschlußgrenze von 1.000 bis 100.000, vorzugsweise 10.000 bis 100.000 g/mol unter Differenzdrucken von 1 bis 10, vorzugsweise 2 bis 7 bar betrieben wird.

Die Nanofiltration ist ebenfalls ein Druckpermeationsverfahren und in ihrem Trennverhalten zwischen der Ultrafiltration und der Umkehrosmose einzuordnen (siehe z.B. R. Rautenbach, G. Schneider, Abschlußbericht zum DFG-Forschungsvorhaben "Nanofiltration", RWTH Aachen (1993). Im Rahmen der Erfindung soll unter Nanofiltration ein derartiges an sich bekanntes Membrantrennverfahren verstanden werden, welches mit Membranen einer Ausschlußgrenze von 200 bis 2.000, vorzugsweise 500 bis 1.000 g/mol bei Differenzdrücken von 12 bis 40, vorzugsweise 12 bis 30 bar gearbeitet wird.

Im Rahmen der Erfindung soll als Umkehrosmose ein unter dieser Bezeichnung an sich bekanntes Membrantrennverfahren verstanden werden, bei weichem solche Membranen zum Einsatz gelangen, die Kochsalz zu mindestens 95 Gew.-%, vorzugsweise zu mindestens 98 Gew.-% zurückhalten. Die transmembrane Druckdifferenz liegt bei 15 bis 100, vorzugsweise 25 bis 75 bar.

Der Permeatfluß, d.h. die Geschwindigkeit der Aufkonzentration wird bei allen genannten Membrantrennverfahren vor allem durch die transmembrane Druckdifferenz beeinflußt. Bei der Durchführung des erfindungsgemäßen Verfahrens liegen die Permeatflüsse bei der Ultrafiltrationsstufe bei 5 bis 200, vorzugsweise 10 bis 100 l/m²/h, bei der Umkehrosmose bei 5 bis 100, vorzugsweise 10 bis 75 l/m²/h und bei der Nanofiltration bei 5 bis 100, vorzugsweise 10 bis 50 l/m²/h.

Für die beim erfindungsgemäßen Verfahren zum Einsatz gelangende Ultrafiltrationseinheit sind alle marktüblichen Membranmodule geeignet, wie Kissen-, Platten-, Spiralwickel-, Rohr-, Kapillar- oder Hohlfasermodule. Die Membranen können aus Polysulfon, Polyacrylnitril, Polyethylen, Teflon, porösem Kohlenstoff, Keramik, Celluloseacetat, Polyharnstoff, aromatischen oder aliphatischen Polyamiden, sulfonierten Polyarylethern, Polyfuran, Polybenzimidazol, verschiedenen Fluorpolymeren, Polyetheraromaten wie Polyimid oder Polyimidazopyrrolidon oder ähnlichen Materialien hergestellt sein. Bevorzugt werden Platten- oder Rohrmodule aus Polysulfon oder Polyacrylnitril verwandt.

Für die Umkehrosmoseeinheit sind alle marktüblichen Membranmodule, wie Spiralwickel-, Rohr-, Kapillar- oder Hohlfasermodule, weniger bevorzugt Kissen-oder Plattenmodule geeignet. Sie können aus den gleichen Materialien, wie die Ultrafiltrationsmembranen bestehen. Bevorzugt eingesetzt werden Spiralwickelmodule aus Polysulfon oder Polyacrylnitril.

Für die Nanofiltrationseinheit können die schon für die Ultrafiltration beschriebenen marktüblichen Modultypen und Membranmaterialien verwendet werden. Es werden bevorzugt Kissen-, Platten- oder Rohrmodule aus Polypiperazinamid, Polysulfon oder Polyacrylnitril verwandt.

Das erfindungsgemäße Verfahren eignet sich zur Aufkonzentration von Kabinenwasser/Overspray-Gemischen, wie sie bei der Verarbeitung von einkomponentigen Wasserlacken anfallen. Beispielhaft genannt seien physikalisch trocknende Lacke auf Basis von Polyurethan- oder Polyacrylatdispersionen, Lacke auf Basis von fettsäuremodifizierten Polyurethan- oder Polyacrylatdispersionen, wäßrige Lacke auf Polybutadienbasis, ungesättigten Polyestern oder Polyacrylaten oder auch einkomponentig zu verarbeitende Lacke auf Basis von hydroxyfunktionellen Polyestern, Polyacrylaten oder Polyurethanen in Kombination mit Aminoharzen oder blockierten Polyisocyanaten als Vernetzerharze.

Gegebenenfalls dem Originallack zugesetzte Pigmente oder Füllstoffe und Lackhilfsmittel wie Verlaufsmittel, Glanzverbesserer, Antiabsetzmittel, Verdicker, Thixotropiemittel, Antioxidantien, Hitzestabilisatoren usw. werden ebenfalls mit aufkonzentriert.

Die eingesetzten Bindemittel sind entweder vollständig oder zum Teil gelöst oder dispergiert oder durch interne oder externe Emulgatoren emulgiert. Die Übergänge zwischen diesen Zuständen sind fließend. Die Bindemittel haben üblicherweise mittlere Molekulargewichte zwischen 2.000 und 100.000 g/mol bei oftmals breiten Molekulargewichtsverteilungen, so daß auch niedermolekulare Bestandteile mit Molekulargewichten kleiner als 2.000 g/mol vorhanden sind. Diese beeinflussen entscheidend wichtige Produkteigenschaften wie Verlauf und Glanz.

Die Vernetzerharze in Einbrennsystemen, wie Aminovernetzerharze oder blockierte Polyisocyanate, haben üblicherweise mittlere Molekulargewichte zwischen 500 und 2.000 g/mol. Sie tragen daher wesentlich zu dem Anteil niedermolekularer Bestandteile in Einbrennlacken bei.

Im Fall anionisch modifizierter Bindemittel enthält der Lack zusätzlich Amine, wie Ammoniak, Triethylamin oder Dimethylethanolamin als Neutralisationsmittel. Auch für diese Amine besteht in der Umkehrosmosestufe ein hoher Rückhalt.

In den meisten Fällen enthalten wasserverdünnbare Lacke zwischen 0,1 und 15 %, vorzugsweise zwischen 0,5 und 10 %, niedermolekulare Lösungsmittel, wie Glykolether, N-Methylpyrrolidon oder Methoxypropylacetat. Auch diese Lösungsmittel sind entscheidend für die lacktechnischen Eigenschaften.

In Summe ergibt sich, daß die beim erfindungsgemäßen Verfahren eingesetzten Lacke, bezogen auf die organischen Bestandteile, einen Anteil von mindestens 5 Gew.-%, bevorzugt mindestens 10-60 Gew.- % mit einem Molekulargewicht kleiner als 2.000 g/mol, bevorzugt einen Anteil von mindestens 5 Gew.-% mit einem Molekulargewicht kleiner als 1.000 g/mol haben. Der Anteil der Lackbestandteile mit einem Molekulargewicht kleiner als 500 g/mol, bevorzugt kleiner als 200 g/mol, beträgt mindestens 0,5 Gew.-%, bevorzugt mindestens 1,0 %.

Der Festkörpergehalt dieser Lacke liegt im allgemeinen bei mindestens 20, vorzugsweise 30 bis 70 Gew.-%, während der Festkörpergehalt des mit dem Wasser der Spritzkabine verdünnten Oversprays im allgemeinen bei 0,05 bis 20, vorzugsweise 0,5 bis 10 Gew.-% liegt. Unter "Aufkonzentration" im Sinne des erfindungsgemäßen Verfahrens ist demzufolge vor allem die Rückgewinnung des wäßrigen Lackes in nahezu Originalzusammensetzung aus dem Overspray/Kabinenwasser-Gemisch zu verstehen, so daß der Einsatz als Originallack oder als Bestandteil eines neuen Originallackansatzes möglich wird.

Das erfindungsgemäße Verfahren ist für alle wäßrigen Einkomponentenlacke geeignet, die bislang durch alleinige Ultrafiltration aufgearbeitet wurden. Vorzugsweise wird das erfindungsgemäße Verfahren jedoch bei solchen Lacken angewendet, bei denen die Aufarbeitung durch Ultrafiltration nicht möglich ist oder zu unbefriedigenden Ergebnissen führt, da lackwesentliche Bestandteile verlorengehen.

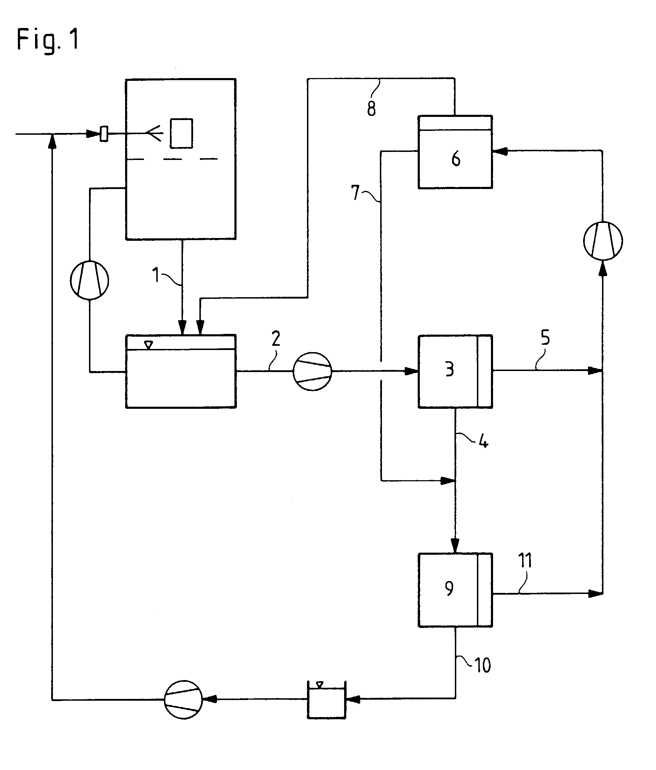

Das Prinzip des erfindungsgemäßen Verfahrens ergibt sich aus Abbildung 1. Hier bedeuten:
(1) den Kabinenwasserkreislauf;
(2) den aufzukonzentrierenden, aus Kabinenwasser/Overspray-Gemisch bestehenden Teil des Kabinenwasserkreislaufes;
(3) die Ultrafiltrationsstufe;
(4) das Retentat der Ultrafiltration;
(5) das Permeat der Ultrafiltration;
(6) die Umkehrosmosestufe;
(7) das Retentat der Umkehrosmose;
(8) das Permeat der Umkehrosmose;
(9) die Nanofiltrationsstufe;
(10) das Retentat der Nanofiltration und
(11) das Permeat der Nanofiltration.

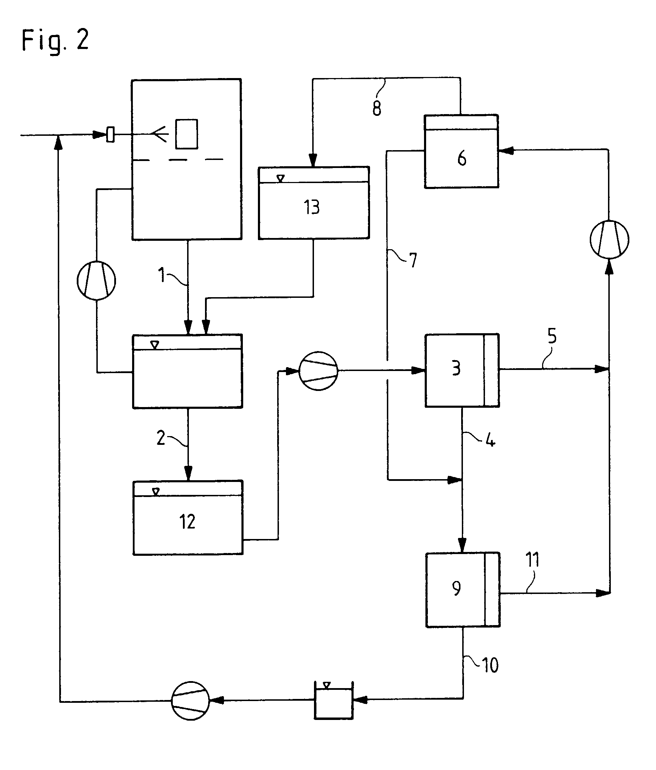

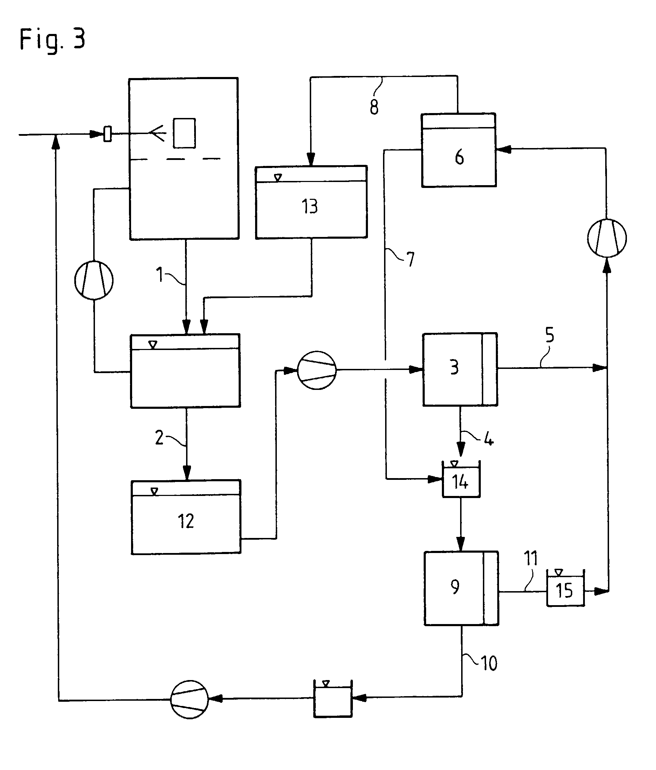

Varianten, die insbesondere bei einer diskontinuierlichen Durchführung des erfindungsgemäßen Verfahrens von Interesse sind, gehen aus den Abbildungen 2 und 3 hervor. Hier haben (1) bis (11) die bereits genannte Bedeutung. Zusätzlich bedeuten
(12) einen Zwischentank für das der Aufkonzentration zuzuführende Kabinenwasser/Overspray-Gemisch;
(13) einen Zwischentank für wiederzuverwendendes aus praktisch reinem Wasser bestehendes Permeat der Umkehrosmose;
(14) ein Zwischentank für das Permeat der Umkehrosmosestufe und
(15) ein Zwischentank für das Permeat der Nanofiltrationsstufe.

Das bei der Durchführung des erfindungsgemäßen Verfahrens aufzukonzentrierende Gemisch aus Kabinenwasser und Overspray (2) stellt entweder die Gesamtmenge des bei der Naßabscheidung des Oversprays anfallenden Gemischs oder, falls dieses Gemisch, wie in den Abbildungen gezeichnet im Kreislauf geführt wird, einen Teilstrom dieses die Kabine verlassenden Gemischs dar. Zur Durchführung des erfindungsgemäßen Verfahrens wird das Gemisch (2) in eine Ultrafiltrationsstufe (3) geführt. In der Ultrafiltrationsstufe (3) erfolgt eine Vorkonzentrierung der hochmolekularen Lackbestandteile im Retentat (4) bis auf 10-90 Gew.-%, vorzugsweise 25-75 Gew.-% der Originallackkonzentration. Die niedermolekularen Lackbestandteile befinden sich zum großen Teil im Permeat (5) der Ultrafiltrationsstufe. Ihre Aufkonzentration erfolgt in einer Umkehrosmosestufe (6) zum Umkehrosmoseretentat (7). Das Permeat (8) der Umkehrosmosestufe besteht aus nahezu reinem Wasser und wird in den Kabinenumwälzwasserkreislauf (1) zurückgegeben. Das Umkehrosmoseretentat (7) wird mit dem Ultrafiltrationsretentat (4) gemischt und in einer Nanofiltrationsstufe (9) aufkonzentriert, bis das Nanofiltrationsretentat (10) die Originallackkonzentration und damit nahezu die Originallackzusammensetzung und Originallackqualität erreicht hat Das Nanofiltrationsretentat kann daher ohne weitere Modifizierung als spritzfertiger Lack in der gleichen Anwendung wieder eingesetzt oder dem Frischlack beigemischt werden. Das Nanofiltrationspermeat (11) wird, da es geringe Anteile an niedermolekularen Verbindungen enthält, für die durch die Nanofiltration kein vollständiger Rückhalt besteht, mit dem Ultrafiltrationspermeat (5) vermischt und ebenfalls der Umkehrosmosestufe (6) zugeführt.

Das die Umkehrosmosestufe (6) verlassende Permeat (8) besteht in der Regel aus "praktisch reinem" Wasser. Dies bedeutet, daß der Gehalt dieses Permeats an organischen Bestandteilen in der Regel bei max. 0,5, vorzugsweise max. 0,1 Gew.-% liegt.

Die erfindungsgemäß eröffnete Möglichkeit, als Nanofiltrationsretentat (10) letztendlich ein wäßriges Beschichtungsmittel zu erhalten, welches bezüglich seiner Zusammensetzung und Konzentration dem ursprünglich eingesetzten Originallack weitgehend entspricht, ist vor allem auf die erfindungswesentliche Maßnahme zurückzuführen, das Retentat (7) der Umkehrosmose zusammen mit dem Retentat (4) der Ultrafiltration der Nanofiltration (9) zu unterziehen, obwohl die in der Umkehrosmose zurückgehaltenen niedermolekularen Bestandteile nur in beschränktem Umfang durch die Nanofiltration zurückgehalten werden, so daß in den kombinierten Permeaten (5) und (11) eine Aufkonzentration an derartigen niedermolekularen Bestandteilen erfolgt mit dem Ergebnis einer Gleichgewichtseinstellung dahingehend, daß sich auch derartige niedermolekulare Bestandteile im Retentat (10) wiederfinden und zwar in einem solchen prozentualen Anteil, der ihrem prozentualen Anteil im aufzukonzentrierenden Gemisch (2) bzw. im Originallack entspricht.

Durch das erfindungsgemäße kontinuierliche Verfahren kann der Festkörpergehalt im Kabinenumwälzwasserkreislauf (1) immer auf einem konstanten Wert zwischen 0,05 und 20 Gew.-%, vorzugsweise zwischen 0,5 und 10 Gew.-% gehalten werden.

Das erfindungsgemäße Verfahren kann auch diskontinuierlich durchgeführt werden (Abb. 1 und 2). Dabei wird das Overspray/Kabinenwasser-Gemisch (2) zunächst aus dem Kabinenumwälzwasserkreislauf (1) in einen Zwischenspeicher (12) gepumpt. Von dort aus erfolgt wie im kontinuierlichen Verfahren die Vorkonzentration der hochmolekularen Bestandteile in der Ultrafiltrationsstufe (3), die Aufkonzentration der niedermolekularen Bestandteile in der Umkehrosmosestufe (6) und die Endkonzentrierung in der Nanofiltrationsstufe (9). Das Umkehrosmosepermeat (8) wird zur späteren Wiederverwertung als Kabinenwasser in einem Speicher (13) gesammelt.

In einer möglichen, jedoch weniger bevorzugten, Ausführungsform des Verfahrens können die Ultrafiltrations-, Umkehrosmose- und Nanofiltrationsstufe unabhängig voneinander durchgeführt werden (Abb. 3). Hierbei wird das Overspray/Kabinenwasser-Gemisch aus dem Zwischenspeicher (12) zunächst in der Ultrafiltrationsstufe (3) vorkonzentriert. Das Ultrafiltrationsretentat (4) wird zunächst in einem weiteren Zwischenspeicher (14) gesammelt. Das Ultrafiltrationspermeat (5) wird in der Umkehrosmosestufe (6) aufkonzentriert. Das Umkehrosmosepermeat (8) wird im Speicher (13) gesammelt und später als Kabinenwassr wieder eingesetzt. Das Umkehrosmoseretentat (7) wird im Zwischenspeicher (14) mit dem Ultrafiltrationsretentat (4) gemischt und der Nanofiltrationsstufe (9) zugeführt. Hier erfolgt die Aufkonzentration bis zur Originallackkonzentration. Das Nanofiltrationspermeat (11) wird in einem Speicher (15) gesammelt. Beim nächsten Aufkonzentrationsvorgang wird es vor der Umkehrosmosestufe (6) dem Ultrafiltrationspermeat (5) zugemischt.

Da beim erfindungsgemäßen Verfahren auch alle im Overspray vorliegenden Hilfsund Zusatzstoffe praktisch verlustfrei im letztendlich erhaltenen Retentat (10) vorliegen, müssen beim erfindungsgemäßen Verfahren lediglich Verluste an flüchtigen Lackbestandteilen, die durch Verdunsten entstehen können, ausgeglichen werden. Als Kabinenwasser wird entsalztes Wasser verwendet.

Beim erfindungsgemäßen Verfahren werden in den einzelnen Trennstufen Aggregate umd Pumpen der an sich bekannten Art eingesetzt, vorausgesetzt, sie gewähren die Aufrechterhaltung der erfindungsgemäßen Verfahrensbedingungen. Als Pumpen werden vorzugsweise solche eingesetzt, bei denen die Scherbelastung des Materials möglichst gering ist wie z.B. Membrankolbenpumpen.

Die Durchführung des erfindungsgemäßen Verfahrens erfolgt im allgemeinen bei Raumtemperatur (z.B. 15 bis 25°C). Da durch Reibung während des Prozesses Wärme entsteht, kann es erforderlich sein, die Gemische zu kühlen.

In den meisten Fällen ist es möglich, das so erhaltene Lackmaterial ohne weitere Modifizierung wieder einzusetzen. Um Qualitätsschwankungen zu vermeiden, ist es aber auch möglich, vor der Wiederverwendung Frischlack mit dem Konzentrat, entsprechend der Menge, in der es durch Overspray anfällt, abzumischen. In einem solchen Fall würde das Retentat als Bestandteil eines neuen Lackansatzes verwendet.

Die folgenden Beispiele sollen die Erfindung näher erläutern, ohne sie jedoch einzuschränken. Ein Vergleich des erfindungsgemäßen Beispiels mit dem nicht erfindungsgemäßen Beispiel belegt die Vorteile des neuen Verfahrens. Alle Angaben in "Teilen" oder "%" beziehen sich auf das Gewicht.

### Beispiel 1

Es wird der folgende Lack verspritzt:

| | |
|---|---|
| 49,5 % | Polyester-Polyurethan-Dispersion (42 %ig in Wasser/N-Methyl-pyrrolidon 52,3:4,6, neutralisiert mit 1,1% Dimethylethanolamin,mittleres Molekulargewicht Mw = 11.000, Uneinheitlichkeit U = 3,0) |
| 29,7 % | Weißpigment (®Bayertitan R-KB-4, Bayer AG) |
| 9,9 % | Aminovernetzerharz (®Luwipal LR 8839, BASF AG, 90 % in Isobutanol) |
| 8,5 % | Wasser |
| 1,2 % | Dimethylethanolamin |
| 1,0 % | Verlaufsverbesserer (®Tegopren 100, Tego Chemie Service GmbH, 10 % in Wasser) |
| 0,2 % | Netzmittel (®Fluorad FC 129,3 M) |

Der Lack wurde vor dem Verspritzen mit Wasser auf eine Spritzviskosität von 35 s (DIN-4-Becher/23°C) verdünnt. Der Festgehalt liegt bei 59 %, der pH-Wert bei 8,8.

Als Kabinenwasser wird entsalztes Wasser verwandt.

Nach Beendigung des Spritzvorgangs beträgt der Festkörpergehalt des Kabinenwasser/Overspray-Gemisches 5 %.

Zur Vorkonzentration wird in der Ultrafiltrationsstufe eine Membran aus Polyacrylnitril mit einer Ausschlußgrenze von 50.000g/mol verwandt. Bei einem Druck von 4 bar erfolgt die Ultrafiltration bis zu einem Festkörpergehalt im Retentat von 30 %.

In der Umkehrosmosestufe erfolgt die Aufkonzentration der vereinigten Permeate der Ultrafiltrations- und der Nanofiltrationsstufe durch eine Membran aus modifiziertem Polyamid mit einem Rückhalt von über 98 % für Kochsalz bei einem Druck von 30 bar. Das Permeat hat einen Anteil an organischen Bestandteilen von kleiner als 0,1 % und wird beim nächsten Spritzvorgang als Kabinenwasser wiederverwendet.

Parallel zur Ultrafiltration und zur Umkehrosmose werden die vereinigten Retentate der Ultrafiltration und der Umkehrosmose in der Nanofiltrationsstufe bis auf den Originalfestkörpergehalt von 59 % aufkonzentriert. Es wird eine Membran aus Polypiperazinamid mit einer Ausschlußgrenze von 1.000 g/mol bei einem Druck von 20 bar eingesetzt. Das Nanofiltrationspermeat wird mit dem Ultrafiltrationspermeat vermischt und der Umkehrosmose zugeführt.

Der aufgearbeitete Lack ist in allen lacktechnischen Eigenschaften wie Härte, Trocknungsgeschwindigkeit, Glanz, Schwitzwasserbeständigkeit oder Lösemittelbeständigkeit mit dem Originallack identisch, so daß er ohne Modifizierung als Lack für den gleichen Anwendungszweck wieder eingesetzt werden kann.

### Beispiel 2 (nicht erfindungsgemäß)

Es wird der gleiche Lack aus Beispiel 1 verspritzt.

Die Aufkonzentration erfolgt diesmal durch eine reine Ultrafiltration. Die Membran besteht aus Polyacrylnitril mit einer Ausschlußgrenze von 50.000 g/Mol, wie in der Ultrafiltrationsstufe aus Beispiel 1.

Es wird bei einem Druck von 4 bar gearbeitet. Der pH-Wert wird durch Zugabe von Dimethylethanolamin auf einem konstanten Wert von 8,8 gehalten. Bei einem Festkörpergehalt von nur 48 % muß die Aufkonzentration beendet werden, da der Permeatfluß nur noch 0,6 l/m²h beträgt.

40 % des eingesetzten Aminoharzes sind durch die Membran gelangt. Auch nach Zugabe dieser verlorengegangenen Menge zum Retentat lassen sich weder der Glanz noch die Lösemittelbeständigkeit oder die Härte des Originallacks wieder erreichen. Eine Verwendung des Retentats für den gleichen Anwendungszweck ist nicht möglich.

## Patentansprüche

1. Verfahren zur Aufkonzentration des in Spritzkabinen mit Naßauswaschung anfallenden, mit Wasser der Spritzkabine verdünnten Oversprays durch eine mehrstufige Membranfiltration, dadurch gekennzeichnet, daß man das aufzukonzentrierende Kabinenwasser/Overspray-Gemisch (2) in einer Ultrafiltrationsstufe (3) vorkonzentriert, in dem man es in ein Retentat (4) und ein niedermolekulare Bestandteile enthaltendes Permeat (5) auftrennt,
das Ultrafiltrationspermeat (5) zusammen mit dem Nanofiltrationspermeat (11) in einer Umkehrosmosestufe (6) in ein Retentat (7) und ein in den Kabinenwasserkreislauf zurückzuführendes, praktisch reines Wasser bestehendes Permeat (8) auftrennt und
die vereinigten Retentate (4) und (7) in einer Nanofiltrationsstufe (9) in das Permeat (11) und ein Retentat (10) auftrennt, welches bezüglich seiner Zusammensetzung und Konzentration dem eingesetzten Wasserlack weitgehend entspricht.

2. Verfahren gemäß Anspruch 1, dadurch gekennzeichnet, daß man die Ultrafiltration unter Aufrechterhaltung eines Differenzdrucks von 1-10 bar und die Nanofiltration unter Aufrechterhaltung eines Differenzdrucks von 12-40 bar durchführt.

3. Verfahren gemäß Anspruch 1 und 2, dadurch gekennzeichnet, daß man das aufzukonzentrierende Kabinenwasser/Overspray-Gemisch (2) dem Kabinenwasser-Kreislauf (1) entnimmt und in einen Zwischenspeicher (12) leitet und von dort aus zu einem beliebigen späteren Zeitpunkt der Nanofiltrationsstufe (3) zuführt.

4. Verfahren gemäß Anspruch 1 bis 3, dadurch gekennzeichnet, daß man das Permeat (8) der Umkehrosmosestufe (6) in einem Zwischenspeicher (13) sammelt und zu einem beliebig späteren Zeitpunkt in den KabinenwasserKreislauf zurückführt.

5. Verfahren gemäß Anspruch 1 bis 4, dadurch gekennzeichnet, daß man die Retentate (4) und (7) in einem Zwischenspeicher (14) sammelt und von dort aus der Nanofiltrationsstufe (9) zuführt.

6. Verfahren gemäß Anspruch 1 bis 5, dadurch gekennzeichnet, daß man das Nanofiltrationspermeat (11) in einem Speicher (15) sammelt und zu einem beliebig späteren Zeitpunkt zusammen mit dem Ultrafiltrationspermeat (5) der Umkehrosmosestufe (6) zuführt.

7. Verwendung des gemäß Anspruch 1 bis 6 anfallenden Nanofiltrationsretentats (10) als einkomponentigen Wasserlack oder als Bestandteil eines einkomponentigen Wasserlacks.

## Claims

1. Process for concentrating the overspray resulting in spray booths with wet washout and thinned with water of the spray booth by means of a multistage membrane filtration, characterised in that the booth water/overspray mixture (2) which is to be concentrated is preconcentrated in an ultrafiltration stage (3) by dividing it into a residue (4) and a permeate (5) comprising low-molecular constituents,
the ultrafiltration permeate (5) is divided together with the nanofiltration permeate (11) in a reverse osmosis stage (6) into a residue (7) and a permeate (8) which is to be returned to the booth water circuit and consists of practically pure water and
the combined residues (4) and (7) are divided in a nanofiltration stage (9) into the permeate (11) and a residue (10) which, as regards its composition and concentration, largely corresponds to the water paint which is used.

2. Process according to claim 1, characterised in that the ultrafiltration is carried out while maintaining a differential pressure of 1-10 bar and the nanofiltration while maintaining a differential pressure of 12-40 bar.

3. Process according to claims 1 and 2, characterised in that the booth water/overspray mixture (2) which is to be concentrated is removed from the booth water circuit (1) and routed into an intermediate store (12), from where it is delivered to the nanofiltration stage (3) at any desired subsequent time.

4. Process according to claims 1 to 3, characterised in that the permeate (8) of the reverse osmosis stage (6) is collected in an intermediate store (13) and returned to the booth water circuit at any desired subsequent time.

5. Process according to claims 1 to 4, characterised in that the residues (4) and (7) are collected in an intermediate store (14), from where they are delivered to the nanofiltration stage (9).

6. Process according to claims 1 to 5, characterised in that the nanofiltration permeate (11) is collected in a store (15) and delivered to the reverse osmosis stage (6) together with the ultrafiltration permeate (5) at any desired subsequent time.

7. Use of the nanofiltration residue (10) resulting according to claims 1 to 6 as a one-component water paint or as a constituent of a one-component water paint.

## Revendications

1. Procédé pour concentrer les chutes de peinture des cabines de pulvérisation recueillies par lavage et diluées par l'eau de la cabine, par une filtration à plusieurs stades opératoires sur des membranes, caractérisé en ce que l'on soumet le mélange eau de cabine/chutes (2) à concentrer à une concentration préalable dans une opération d'ultrafiltration (3) provoquant la séparation en un rétentat (4) et un perméat (5) contenant les composants à bas poids moléculaire,
on sépare le perméat d'ultrafiltration (5) avec le perméat de nanofiltration (11) dans une opération d'osmose inverse (6) en un rétentat (7) et un perméat (8) consistant pratiquement en eau pure et qu'on recycle au circuit d'eau de cabine et
on sépare les rétentats (4) et (7) combinés dans une opération de nanofiltration (9) en le perméat (11) et un rétentat (10) qui, par sa composition et sa concentration, correspond pratiquement à la peinture à l'eau initiale.

2. Procédé selon la revendication 1, caractérisé en ce que l'on réalise l'ultrafiltration en maintenant une différence de pression de 1 à 10 bar et la nanofiltration en maintenant une différence de pression de 12 à 40 bar.

3. Procédé selon les revendications 1 et 2, caractérisé en ce que l'on prélève le mélange eau de cabine/chutes (2) à concentrer dans le circuit d'eau de cabine (1) et on l'envoie dans un réservoir intermédiaire (12) d'où, à un moment quelconque ultérieurement, on l'envoie à la nanofiltration (3).

4. Procédé selon les revendications 1 à 3, caractérisé en ce que l'on recueillie le perméat (8) de l'osmose inverse (6) dans un réservoir intermédiaire (13) d'où, à un moment quelconque ultérieur, on le recycle au circuit d'eau de cabine.

5. Procédé selon les revendications 1 à 4, caractérisé en ce que l'on recueillie les rétentats (4) et (7) dans un réservoir intermédiaire (14) d'où on envoie le mélange à l'opération de nanofiltration (9).

6. Procédé selon les revendications 1 à 5, caractérisé en ce qu'on recueillie le perméat de nanofiltration (11) dans un réservoir (15) d'où, à un moment quelconque ultérieur, on l'envoie avec le perméat d'ultrafiltration (5) à l'osmose inverse (6).

7. Utilisation du rétentat de nanofiltration (10) obtenu selon les revendications 1 à 6 en tant que peinture à l'eau à un seul composant ou en tant que constituant d'une peinture à l'eau à un seul composant.
